# EUROPÄISCHE PATENTANMELDUNG

(11) **EP 2 270 466 A2**
(43) Veröffentlichungstag der Anmeldung: **05.01.2011**
(21) Anmeldenummer: 10005717.3
(22) Anmeldetag: 02.06.2010
(51) Int. Cl.: G01N 1/42, A01N 1/02

(54) **Präparathalter für eine hochdruck Einfriervorrichtung**

(30) Priorität: 01.07.2009 AT 10262009
(71) Anmelder: Leica Mikrosysteme GmbH, 1170 Wien (AT)
(72) Erfinder: Leunissen, Johannes, Dunedin 9010 (NZ); Wurzinger, Paul, 2232 Deutsch-Wagram (AT)
(74) Vertreter: Hassenbürger, Anneliese

(57) **Zusammenfassung**

Ein Verfahren zur Herstellung einer in einen Probenbehälter (1, 1a, 1b, 1c) eingeschlossenen, wasserhaltigen, gefrierkonservierten Probe, bei welchem zumindest Probenmaterial in den Probenbehälter eingebracht, dieser sodann druckdicht verschlossen und anschließend mittels eines Kryogens (8) in einer zeitlichen und örtlichen Abfolge abgekühlt wird, wobei vorerst ein Opferbereich (4) des Behälterinhaltes (2) und erst danach der gesamte Behälterinhalt erstarrt. Ein hierbei bevorzugt verwendbarer Probenbehälter (1a) ist röhrchenförmig, an seinen beiden Enden verschlossen und im Wesentlichen U-förmig ausgebildet.

## Beschreibung

Die Erfindung bezieht sich auf ein Verfahren zur Herstellung einer in einen Probenbehälter eingeschlossenen, wasserhaltigen, gefrierkonservierten Probe, bei welchem zumindest Probenmaterial in den Probenbehälter eingebracht, dieser sodann druckdicht verschlossen und anschließend mittels eines Kryogens abgekühlt wird.

Ebenso bezieht sich die Erfindung auf einen Probenbehälter zur Durchführung des Verfahrens.

Ein Verfahren sowie eine Vorrichtung dieser Art sind aus der AT 505427 A1 der Anmelderin bekannt geworden. Wie aus diesem Dokument hervorgeht, versucht man bei biologischen Proben das Präparat unter Hochdruckbedingungen einzufrieren, wobei als Kryogen beispielsweise flüssiger Stickstoff verwendet wird. Da die Proben wasserhaltig sind ergibt sich wegen der Ausdehnung des Wassers beim Gefrieren zu Eis ein beträchtlicher Druck, wenn die Probe beim Abkühlen eingeschlossen ist und deren Ausdehnung behindert wird. Dieser Druck ist, wie ausführlich in dem Dokument erläutert, erwünscht, da man dadurch ein Hochdruckgefrieren ohne hohen apparativen Aufwand und hohen Kühlmittelverbrauch erzielen kann. Angestrebt wird mit dem bekannten Verfahren, dass das Wasser in der Probe eine Glasbildung oder zumindest Mikrokristallbildung durchläuft - im Gegensatz zu bei Atmosphärendruck gefrorenen oder auch Schock gefrorenen Proben. Um bessere thermische Bedingungen des Gefriervorganges zu erzielen kann der Probenbehälter vor dem eigentlichen Gefriervorgang auch vorgekühlt werden, zum Beispiel in einem Ethanol- oder Ethanol/Methanol-Gemisch, dessen Temperatur zwischen 273 und 251 K eingestellt ist. Der bevorzugte Wert liegt knapp oberhalb des Temperaturtripelpunktes Wasser-Eis Iₕ-Eis III (251K). Wenn die Probe sich im thermischen Gleichgewicht befindet, wird sodann der eigentliche Gefriervorgang mittels eines Kryogens durchgeführt.

Nach dem Gefriervorgang werden die Probenbehälter geöffnet oder zerschnitten und die Probe entnommen und sodann einer weiteren Behandlung zugeführt, beispielsweise einer Kryo-Substitution bei Temperaturen typischerweise oberhalb 183K, beispielsweise bei minus 80°C bis -40°C mittels Aceton. Andererseits können die Proben auch mit einem Mikrotom bekannter Art geschnitten oder geschliffen werden.

Wenngleich das in dem oben genannten Dokument veröffentlichte Verfahren eine wesentliche Verbesserung auf dem Gebiet der Gefrierkonservierung von biologischen Proben bringt, hat sich gezeigt, dass beispielsweise bei Proberöhrchen, deren Enden durch Quetschen verschlossen sind, bei den entstehenden hohen Drücken von über 2000 bar die Enden undichte werden können, wodurch die Probe unbrauchbar wird. Andererseits liegen oft brauchbare, d.h. glasartig / mikrokristallin gefrorene, Probenbereiche inmitten von Probenbereichen, die große Kristalle von hexagonalem Eis I aufweisen und daher unbrauchbar sind. Es ist im Allgemeinen nicht vorhersehbar, welche Probenbereiche brauchbar und welche unbrauchbar sind.

Erfahrungsgemäß kann die Rate dieser Undichtigkeit reduziert werden wenn die gesamte Probe möglichst gleichzeitig abgekühlt wird. Dazu wird das Probenröhrchen beispielsweise während des Eintauchens parallel zur Oberfläche des Kryogens orientiert. In diesem Fall liegen aber oft brauchbare, d.h. glasartig / mikrokristallin gefrorene, Probenbereiche inmitten von Probenbereichen, die große Kristalle von hexagonalem Eis I aufweisen und daher unbrauchbar sind. Es ist im Allgemeinen nicht vorhersehbar, welche Probenbereiche brauchbar und welche unbrauchbar sind.

Es ist eine Aufgabe der Erfindung, das bekannte Verfahren bzw. die bekannten Vorrichtungen zur Durchführung des Verfahren dahingehend zu verbessern, dass der Druck während des Einfrierens mit Sicherheit aufrecht erhalten wird und sich definierte brauchbare Bereiche der Probe ergeben.

Die genannte Aufgabe wird mit einem Verfahren der eingangs genannten Art gelöst, bei welchen erfindungsgemäß der Behälter in einer zeitlichen und örtlichen Abfolge abgekühlt wird, wobei vorerst ein Opferbereich des Behälterinhaltes und erst danach der Behälterinhalt erstarrt.

Der grundlegende Gedanke der Erfindung besteht somit darin, den Probenbehälter mit der Probe nicht so rasch wie möglich dadurch abzukühlen, dass sie komplett in ein Kryogen, zum Beispiel flüssigen Stickstoff getaucht oder geworfen wird, sondern dass man überlegt, zunächst Bereiche des Behälters abzukühlen, in welchen ein meist nicht genutzter "Opferbereich" des Behälterinhaltes erstarrt, und erst dann das weitere Erstarren des gesamten Behälterinhaltes eintreten zu lassen.

Es kann zweckmäßig sein, wenn vor dem Verschließen und Abkühlen der Opferbereich des Behälters mit einer sich beim Erstarren ausdehnenden Substanz befüllt wird. Das Erstarren des Opferbereichs führt dann zu einem Druckanstieg in den vorerst noch nicht erstarrten Probenteilen, der die Ausbildung störender Kristalle während des finalen Erstarrens der Probe verhindert. Dabei kann diese Substanz mit Vorteil zumindest teilweise aus Wasser bestehen.

Eine günstige, auch für geringe Probenmengen geeignete Variante sieht vor, dass ein röhrchenförmiger, an seinen beiden Enden verschlossener Probenbehälter zunächst an zumindest einem Ende mittels eines Kryogens abgekühlt wird. Bei dieser Variante stellt allerdings das Dichten des zunächst nicht abgekühlten Endes eine technische Herausforderung dar, die durch die im Weiteren offenbarten Ausführungsformen elegant umgangen werden kann.

Eine zweckmäßige Möglichkeit zur zeitlich und räumlich gesteuerten Abkühlung besteht darin, dass ein röhrchenförmiger, an seinen beiden Enden verschlossener Probenbehälter, der in einem Bereich zwischen seinen Enden ein Mittel aufweist, welches eine in Bezug auf thermische Leitfähigkeit reduzierte Kopplung zur Umgebung gewährleistet, mittels eines Kryogens abgekühlt wird. Dabei kann das Mittel eine außen an dem Behälter angebrachte Isolierung sein.

Ein einfach gestalteter Probenbehälter zur Durchführung des Verfahrens zeichnet sich dadurch aus, dass er röhrchenförmig, an seinen beiden Enden verschlossen und im Wesentlichen U-förmig ausgebildet ist.

Bei einer anderen zweckmäßigen Variante des Probenbehälters kann vorgesehen sein, dass er röhrchenförmig, an seinen beiden Enden verschlossen und in einem Bereich zwischen seinen Enden mit einer Isolierung versehen ist.

Eine Isolierung im Nutzbereich ist auch einfach zu realisieren, wenn zumindest ein Teil einer an dem Behälter angreifenden Haltevorrichtung als Isolierung ausgebildet ist.

In einigen Fällen kann es auch von Vorteil sein, wenn der Probenbehälter aus zwei voneinander trennbaren Teilen besteht.

Hierbei kann zur Verbindung der Teile vorgesehen sein, dass die beiden Teile miteinander dichtend verschraubbar sind.

Um ein unter Umständen, vor allem bei kleinen Behältern mühsames Verschrauben zu vermeiden, ist es jedoch auch möglich, dass die beiden Teile in einer Spannvorrichtung zusammen pressbar sind.

Die Erfindung samt weiteren Vorteilen wird im Folgenden anhand beispielsweiser Ausführungsformen näher erläutert, die in der Zeichnung veranschaulicht sind. In dieser zeigen
Fig. 1 ein an beiden Enden zugequetschtes Probenröhrchen mit darin eingeschlossenem Probenmaterial,
Fig. 2 ein Probenröhrchen wie nach Fig. 1, jedoch von einer Isolierung an seiner Außenseite umgeben,
Fig. 3 ein U-förmig ausgebildetes Probenröhrchen beim Eintauchen in ein Kryogen,
Fig. 4 einen zweiteiligen verschraubbaren Probenbehälter mit einem verhältnismäßig großen Opferbereich in einem Teil und dem eigentlichen Probenmaterial in dem anderen Teil und
Fig. 5 gleichfalls einen zweiteiligen Behälter, der in eine Spannvorrichtung eingespannt ist.

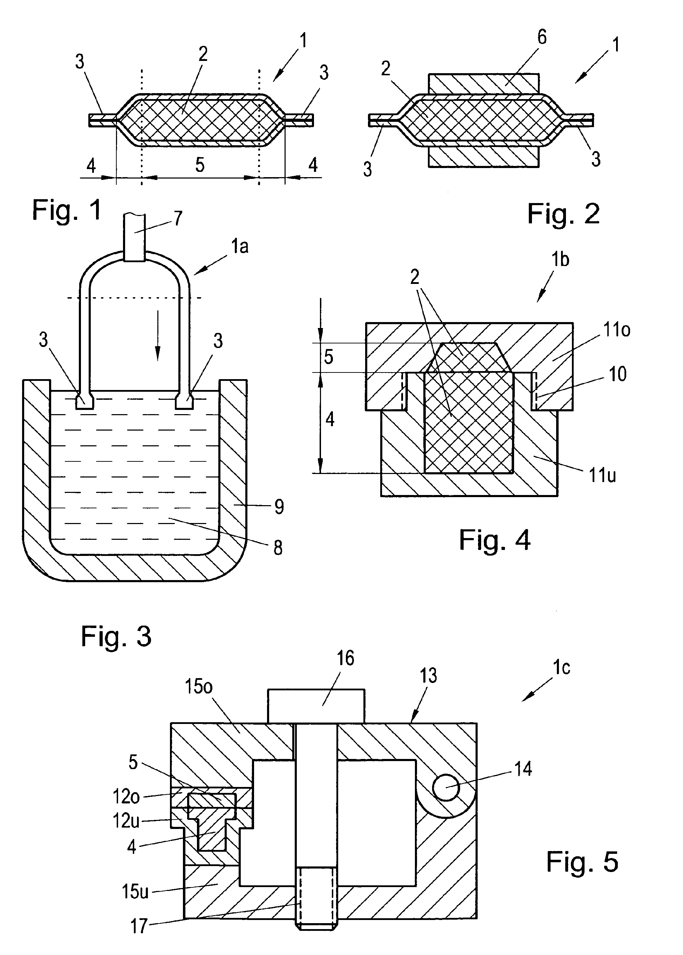

Fig. 1 zeigt einen röhrchenförmigen Probenbehälter 1, der beispielsweise für Einzelzellen oder Kleinorganismen, wie Nematoden, dienen kann und aus einem Kapillarrohr geformt ist. Eine beispielsweise Ausführungsform eines solchen Probenbehälters ist bei einem Außendurchmesser von 0,6 mm und einem Innendurchmesser von 0,3 mm 16 mm lang. Nach Befüllen des Probenbehälters mit einer wasserhaltigen biologischen Probe, welche dann den Behälterinhalt 2 bildet, wird der beispielsweise aus Kupfer bestehende Behälter an seinen Enden 3 fest verschlossen, z.B. über eine Länge von circa 1 mm mit einer Zange gequetscht.

Danach wird der Behälter zunächst an seinen beiden Enden 3 abgekühlt und sodann wird auch der Rest des Behälters abgekühlt, sodass der gesamte Behälterinhalt erstarrt. Es ist klar, dass zufolge der Wärmeleitfähigkeit der Behälterwandung hier keine klaren Übergänge vorliegen werden, doch erzielt man im vorliegenden Fall, insbesondere bei einem röhrchenförmigen Behälter 1 mit gequetschten Enden, den Vorteil, dass der Behälterinhalt in den Endbereichen des Röhrchens zuerst erstarrt. Wegen des frühzeitigen Erstarrens der Endbereiche werden die Behälterenden nicht mehr aufplatzen, da sie durch das erstarrte Probenmaterial geschützt werden. Gleichzeitig bedingt die Erstarrung der Probenenden, die in diesem Fall als Opferbereiche dienen, den gewünschten Druckaufbau.

Jener Bereich (oder Bereiche) des Behälterinhaltes, der zuerst erstarrt und der nicht notwendigerweise Probenmaterial enthalten muss, was später noch erläutert wird, wird im Zusammenhang mit der Erfindung "Opferbereich" genannt, da solche Bereiche im allgemeinen nicht zur Probengewinnung verwendet werden. Bei einem Behälter nach Fig. 1 werden beispielsweise nach dem völligen Gefrieren des Behälterinhalts 2 die beiden Endbereiche des Behälters an den durch punktierte Linien angedeuteten Stellen weg geschnitten, sodass sich zwei Opferbereiche 4 und ein Nutzbereich 5 ergeben. Der Nutzbereich enthält jenes Probenmaterial, das auf bekannte, oben bereits erläuterte Weise weiter verwendet wird.

Zur praktischen Durchführung des erfindungsgemäßen Verfahrens bieten sich verschiedene Wege bzw. Behälterausgestaltungen an. Um beispielsweise zu ermöglichen, dass das Gefrieren zuerst an den Enden eintritt, kann man das Verfahren dahingehend ausgestalten, dass ein röhrchenförmiger, an seinen beiden Enden verschlossener Probenbehälter, in einem Bereich zwischen seinen Enden ein Mittel aufweist, welches eine in Bezug auf thermische Leitfähigkeit reduzierte Kopplung zur Umgebung gewährleistet.

So zeigt Fig. 2 einen Behälter wie in Fig. 1 dargestellt, jedoch mit einer an seiner Außenwandung aufgebrachten Isolierung 6 aus einem geeigneten Material, beispielsweise aus Kunststoff. Ein solcher, wie nach Fig. 1 befüllter Behälter, kann dann als gesamter in ein Kryogen eingetaucht werden, wobei wegen der Isolierung der Nutzbereich 5 erst nach den Opferbereichen 4 erstarren wird.

Eine andere Möglichkeit zur Realisierung der räumlich und zeitlich gesteuerten Abkühlung kann darin bestehen, unterschiedliche Wandstärken des Probenbehälters vorzusehen, d.h. die Wandstärke um den Nutzbereich herum größer zu wählen als um einen Opferbereich. Diese Ausführungsform wird besonders vorteilhaft mit einem Behältermaterial mit geringer Wärmeleitfähigkeit realisiert.

Eine Behälterform, die auf einfache, jedoch wirkungsvolle Weise die Durchführung des erfindungsgemäßen Verfahrens begünstigt, ist in Fig. 3 ersichtlich. Hier ist ein Probenbehälter 1a röhrchenförmig und im Wesentlichen U-förmig gestaltet. Die Enden sind wie bei den Ausführungen nach Fig.1 und 2 durch Zuquetschen verschlossen, wobei hier angemerkt sei, dass die Enden selbstverständlich auch auf andere Weise verschlossen werden können, beispielsweise durch geeignet geformte, z.B. konische Pfropfen. Zum Gefrieren wird der Behälter 1a, der beispielsweise in seinem gebogenen Basisteil durch eine Haltevorrichtung 7 gehalten wird, in ein mit einem Kryogen 8, z.B. flüssigem Stickstoff gefülltes Dewargefäß 9 getaucht, und zwar, wie dargestellt, zunächst mit den beiden Endebereichen 3 und erst danach vollständig untergetaucht. In den Endbereichen friert bzw. erstarrt der Behälterinhalt 2 naturgemäß zuerst, wodurch die Verschlussstellen abgedichtet werden und der Druckaufbau nicht zum Austreten von Behälterinhalt führen kann.

In Zusammenhang mit der aus Fig. 3 ersichtlichen Haltevorrichtung 7 sei angemerkt, dass ein den Behälter umgreifender Teil einer solchen Haltevorrichtung auch als Isolierung im Sinne der Isolierung 6 nach Fig. 2 dienen kann.

Die im Rahmen der Erfindung verwendeten Behälter müssen weder röhrchenförmig noch einteilig ausgestaltet sein, was im Folgenden an Hand zweier weitere Ausführungsformen erläutert werden soll.

Fig. 4 zeigt einen Behälter 1b, der aus zwei, mit einem Gewinde 10 versehenen Teilen 11o, 11u besteht, die dichtend miteinander verschraubbar sind. Jeder der beiden Behälterteile 11o, 11u besitzt einen Innenraum, wobei bei dem dargestellten Beispiel der in der Zeichnung untere Behälterteil 11u ein größeres Volumen besitzt, als der obere Teil 11o. An Hand des Beispiels nach Fig. 4 soll eine Variante des erfindungsgemäßen Verfahrens erläutert werden, bei welchem der Behälterinhalt 2 nicht homogen aus Probenmaterial besteht. Vielmehr ist ein Opferbereich 4, hier der Innenraum des unteren Behälterteils 11u, mit einer Substanz gefüllt, welche sich beim Erstarren signifikant ausdehnt, insbesondere mit einer zumindest zum Teil aus Wasser bestehenden Substanz oder mit reinem Wasser. In dem vergleichsweise kleineren Innenraum des oberen Behälterteils 11o, dem Nutzbereich 5, ist hingegen das eigentliche Probenmaterial enthalten. Eine solche Variante stellt den erforderlichen Druckaufbau auch dann sicher, wenn entweder nur wenig Probenmaterial vorhanden ist oder das Probenmaterial selbst auf Grund seiner Eigenschaften nicht genügend Druck aufbauen kann. Ein Behälter nach Fig. 4 kann im Einklang mit der Erfindung räumlich und zeitlich gesteuert so abgekühlt werden, dass er mit dem Teil 11u, welcher den Opferbereich 4- und hier das Wasser od. dgl. - enthält, zuerst in ein Kryogen getaucht und erst danach vollständig eingetaucht wird. Das sich zuerst beim Erstarren ausdehnende Wasser oder eine andere geeignete Substanz übt dadurch den erwünschten Druck auf das eigentliche Probenmaterial bereits vor dessen Erstarren aus, sodass dieses die eingangs behandelte erwünschte Struktur erhält.

Bei Abwandlungen eines zweiteiligen Behälters kann auch vorgesehen sein, dass der gesamte Innenraum in einem der beiden Behälterteile ausgebildet ist und der andere Behälterteil lediglich einen Deckel darstellt.

In Fig. 5 ist ein gleichfalls zweiteiliger Behälter 1c gezeigt, dessen beiden Teile 12o, 12u jedoch nicht verschraubt sonder lediglich aufeinander gelegt sind. Um ein Abdichten des gesamten, aus einem oberen Nutzbereich 5 und einem unteren Opferbereich 4 bestehenden Behälterinhaltes auch bei Druckaufbau im Behälterinneren sicher zu stellen, wird der Behälter in einer Spannvorrichtung eingespannt. Eine solche Spannvorrichtung 13 kann im Prinzip beliebig ausgestaltet sein, wobei in dem Beispiel nach Fig. 5 zwei um eine Achse 14 verschwenkbare Arme 15o, 15u vorgesehen sind, die mittels einer Spannschraube 16, die über ein Gewinde 17 mit dem in der Zeichnung unteren Arm 17 zusammenwirkt, mit ihren freien Enden die beiden Behälterteile 12o, 12u dichtend gegeneinander pressen.

Bei dem Behälter 1c nach Fig. 5 ist eine ähnliche Aufteilung von Opferbereich 4 und Nutzbereich 5 gegeben, wie bei dem Behälter 1b nach Fig.4 und auch das Abkühlen erfolgt sinngemäß wie im Zusammenhang mit Fig. 4 beschrieben.

### LISTE DER BEZUGSZEICHEN

- 1: auch 1a, 1b, 1c, Behälter
- 2: Behälterinhalt
- 3: Enden
- 4: Opferbereich
- 5: Nutzbereich
- 6: Isolierung
- 7: Haltevorrichtung
- 8: Kryogen
- 9: Dewargefäß
- 10: Gewinde
- 11o: Behälterteil
- 11u: Behälterteil
- 12o: Behälterteil
- 12u: Behälterteil
- 13: Spannvorrichtung
- 14: Achse
- 15o: Arm
- 15u: Arm
- 16: Spannschraube
- 17: Gewinde

## Patentansprüche

1. Verfahren zur Herstellung einer in einen Probenbehälter (1, 1a, 1b, 1c) eingeschlossenen, wasserhaltigen, gefrierkonservierten Probe, bei welchem zumindest Probenmaterial in den Probenbehälter eingebracht, dieser sodann druckdicht verschlossen und anschließend mittels eines Kryogens (8) abgekühlt wird,
**dadurch gekennzeichnet, dass**
der Behälter (1, 1a, 1b, 1c) in einer zeitlichen und örtlichen Abfolge abgekühlt wird, wobei vorerst ein Opferbereich (4) des Behälterinhaltes (2) und erst danach der restliche Behälterinhalt erstarrt.

2. Verfahren nach Anspruche 1, **dadurch gekennzeichnet, dass** vor dem Verschließen und Abkühlen der Opferbereich (4) des Behälters (1b, 1c) mit einer sich beim Erstarren ausdehnenden Substanz befüllt wird.

3. Verfahren nach Anspruch 2, **dadurch gekennzeichnet, dass** die Substanz zumindest zum Teil aus Wasser besteht.

4. Verfahren nach einem der Ansprüche 1 bis 3, **dadurch gekennzeichnet, dass** ein röhrchenförmiger, an seinen beiden Enden verschlossener Probenbehälter (1, 1a) zunächst an zumindest einem Ende mittels eines Kryogens (8) abgekühlt wird.

5. Verfahren nach einem der Ansprüche 1 bis 3, **dadurch gekennzeichnet, dass** ein röhrchenförmiger, an seinen beiden Enden verschlossener Probenbehälter (1), der in einem Bereich zwischen seinen Enden ein Mittel (6) aufweist, welches eine in Bezug auf thermische Leitfähigkeit reduzierte Kopplung zur Umgebung gewährleistet, mittels eines Kryogens abgekühlt wird.

6. Verfahren nach Anspruch 5, **dadurch gekennzeichnet, dass** das Mittel eine außen an dem Behälter angebrachte Isolierung (6) ist.

7. Probenbehälter (1a) zur Durchführung des Verfahrens nach einem der Ansprüche 1 bis 3, **dadurch gekennzeichnet, dass** er röhrchenförmig, an seinen beiden Enden verschlossen und im Wesentlichen U-förmig ausgebildet ist.

8. Probenbehälter (1) zur Durchführung des Verfahrens nach einem der Ansprüche 1 bis 3 und 6, **dadurch gekennzeichnet, dass** er röhrchenförmig, an seinen beiden Enden verschlossen und in einem Bereich zwischen seinen Enden mit einer Isolierung (6) versehen ist.

9. Probenbehälter (1a) zur Durchführung des Verfahrens nach einem der Ansprüche 1 bis 3, **dadurch gekennzeichnet, dass** zumindest ein Teil einer an dem Behälter angreifenden Haltevorrichtung (7) als Isolierung ausgebildet ist.

10. Probenbehälter (1b; 1c) zur Durchführung des Verfahrens nach einem der Ansprüche 1 bis 3, **dadurch gekennzeichnet, dass** er aus zwei voneinander trennbaren Teilen (11o, 11u; 12o, 12u) besteht.

11. Probenbehälter nach Anspruch 10, **dadurch gekennzeichnet, dass** die beiden Teile (11o, 11u) miteinander dichtend verschraubbar sind.

12. Probenbehälter nach Anspruch 11, **dadurch gekennzeichnet, dass** die beiden Teile (12o, 12u) in einer Spannvorrichtung (13) zusammen pressbar sind.
